# EUROPEAN PATENT APPLICATION

(11) **EP 4 641 864 A1**
(43) Date of publication of application: **29.10.2025**
(21) Application number: 24171696.8
(22) Date of filing: 22.04.2024
(51) Int. Cl.: H02J 3/32, H02J 1/14, H02J 7/34, H02J 3/16, H02J 3/18, H02J 15/00, C25B 1/04, C25B 9/65, C25B 15/02

(54) **ELECTROLYZER WITH FAULT RIDE-THROUGH CAPABILITY**

(71) Applicant: Siemens Energy Global GmbH & Co. KG, 81739 München (DE)
(72) Inventor: Langenberg, Nils, 90461 Nürnberg (DE); Bendig, Marvin, 90513 Zirndorf (DE); Craciun, Bogdan, 91052 Erlangen (DE); Loku, Fisnik, 90768 Fürth (DE); Schumann, Sven, 91452 Wilhermsdorf (DE)

(57) **Abstract**

A power system that is fed electrical power from a public grid includes a bus electrically connected to the public grid and operable to transfer power to and from the public grid. A plurality of electrical loads is coupled to the bus and is operable to draw a first quantity of power from the bus during operation. An energy storage system is electrically connected to the bus and operates to store a second quantity of power. A converter operates to direct a third quantity of power from the energy storage system to the bus in response to a drop in the available power from the public grid, the third quantity of power delivered by the energy storage system being sufficient to allow the bus to deliver at least the first quantity of power to the plurality of electrical loads to maintain the operation of the plurality of electrical loads.

## Description

### BACKGROUND

Current electrical grids, including large scale utility or public grids are often governed by a grid code that includes rules and regulations that assure safe, stable, and highly reliable operation.

Utility grid codes, also referred to as public grid codes, are technical standards or regulations that define the requirements and parameters for connecting power generation, transmission, large loads, and distribution systems to the utility grid. These codes are designed to ensure the safe, reliable, and efficient integration of various types of power sources, such as renewable energy systems, distributed generation, and large-scale power plants, into the existing electricity grid infrastructure. Grid codes typically outline the technical specifications, performance criteria, and operational guidelines that grid-connected power generators, power consumers, or system operators must adhere to in order to maintain the stability and quality of the grid. They may include provisions related to voltage and frequency regulation, active and reactive power control, fault ride-through capabilities, synchronization requirements, and protection coordination. Compliance with utility grid codes is essential for ensuring the seamless and secure integration of diverse power resources into the grid, minimizing the risk of disruptions or adverse impacts on system operation, and facilitating the transition towards a more sustainable and resilient energy landscape. These codes play a crucial role in promoting grid reliability, interoperability, and the effective management of power supply and demand within interconnected electrical networks.

Large loads must be adapted or designed to satisfy the requirements of the grid codes including, among other requirements providing fault ride-through capabilities.

### SUMMARY

In one aspect, a power system that is fed electrical power from a public grid includes a bus electrically connected to the public grid and operable to transfer power to and from the public grid. A plurality of electrical loads is coupled to the bus and is operable to draw a first quantity of power from the bus during operation. An energy storage system is electrically connected to the bus and operates to store a second quantity of power. A converter operates to direct a third quantity of power from the energy storage system to the bus in response to a drop in the available power from the public grid, the third quantity of power delivered by the energy storage system being sufficient to allow the bus to deliver at least the first quantity of power to the plurality of electrical loads to maintain the operation of the plurality of electrical loads.

The power system electrical loads may include at least two electrolyzers that operate in response to the flow electrical power to produce hydrogen.

The power system energy storage system may include at least two energy storage devices selected from the group of a battery and a capacitor.

The power system may also include an energy storage system that is operable to store a stored quantity of energy sufficient to deliver the first quantity of power for two seconds.

The power system may also include a converter that includes one of an AC to DC converter and a DC to DC converter operable to deliver DC power to each electrical load of the plurality of electrical loads.

The power system may also include a converter that includes a plurality of electrical converters, each electrical converter connected to the bus and operable to deliver conditioned power to one and only one electrical load of the plurality of electrical loads and energy storage devices.

The power system may also include electrical converters selected from the group of an AC to DC converter and a DC to DC converter.

The power system includes an energy storage system that may include a capacitor in the form of an ultra-capacitor.

Other technical features may be readily apparent to one skilled in the art from the following figures, descriptions, and claims.

In another aspect, a method of operating a power system that receives electrical power from a public grid includes connecting a bus to the public grid to allow for the transfer of power between the public grid and the bus, operating a plurality of electrical loads by drawing a first quantity of power from the bus, and storing a second quantity of power in an energy storage system. The method further includes the energy storage system drawing energy from the bus, detecting a drop in the available power from the grid, and delivering a third quantity of power from the energy storage system to the bus, the third quantity of power being sufficient to allow the bus to continuously deliver the first quantity of power to the plurality of electrical loads to allow for continued operation of the plurality of electrical loads.

The method may also include providing an electrical load of the plurality of electrical loads in the form of an electrolyzer that operates in response to the receipt of electrical power to produce hydrogen.

The method may also include selecting at least two energy storage devices from the group of a battery and a capacitor.

The method may also include storing a stored quantity of energy in the energy storage system, the stored quantity of energy sufficient to deliver the first quantity of power for two seconds.

The method may also include delivering power from the bus to the energy storage system when the power available on the bus exceeds the first quantity of power.

The method may also include conditioning the power using a plurality of electrical converters, each electrical converter connected to the bus and operable to deliver conditioned power to one and only one electrical load of the plurality of electrical loads and energy storage devices.

The method may also include selecting the electrical converters from the group of an AC to DC converter and a DC to DC converter.

Other technical features may be readily apparent to one skilled in the art from the following figures, descriptions, and claims.

Some large loads include energy storage for each individual load. However, this leads to high initial costs and negative impacts on the plant layout in large systems with multiple large loads; particularly if the energy storage is needed to provide the required FRT capability. The system approach illustrated herein, where one energy storage system 402 is connected to a common bus to provide the necessary energy buffer for several load lines simultaneously, greatly reduces the overall costs and the overall complexity, while positively impacting the overall plant layout.

Additionally, the installed energy storage system 402 in combination with the interfacing converter technology (in case of active front end, AFE converters) can be utilized in normal grid scenarios to provide additional grid services such as power factor correction, frequency support, voltage stabilization and others. This may lead to the reduction of additional filtering and power factor compensation equipment, when the electrolysis is operated with thyristor-based converter systems. Through this, a significant cost reduction of the overall system as well as increased grid service functionality can be expected.

As an additional benefit, ancillary systems (compressors, gas management, SCADA systems, etc.) may also be kept energized. The added energy storage units can function as UPS (uninterrupted power supplies) for these systems.

### BRIEF DESCRIPTION OF THE DRAWINGS

To easily identify the discussion of any particular element or act, the most significant digit or digits in a reference number refer to the figure number in which that element is first introduced.
FIG. 1 is a chart illustrating grid conditions that may require fault ride-through capability requirements.
FIG. 2 schematically illustrates an inert load plant including an AC bus.
FIG. 3 schematically illustrates an inert load plant including a DC bus.
FIG. 4 schematically illustrates an AC energy distribution system including the inert load plant of FIG. 2.
FIG. 5 schematically illustrates a DC energy distribution system including the inert load plant of FIG. 3.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, terms such as "first", "second", "third" and so forth may be used herein to refer to various elements, information, functions, or acts, but should not be considered as limiting in any way. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

Electrolyzers are devices or systems that use electrical energy to split water into hydrogen and oxygen through a process called electrolysis. This technology plays a key role in the production of renewable hydrogen fuel for various industrial, energy storage, and transportation applications.

Large loads such as electrolyzers require permission to connect to public grids. These large loads often include a converter interface that adapts the power available to the needs of the particular load. To get permission to connect converter-interfaced large-scale load plants (multi-MW up to several hundred MW), such as electrolysis systems or other inert large loads to the public grid, the loads must comply with the corresponding grid code requirements. These requirements may include among other requirements, the ability to maintain operation during fault situations in the overlying utility or public (HVAC) grid. The term for this is Fault Ride Through (FRT) capability of the connecting plants. For generating plants, these FRT requirements have already been defined (i.e. for wind turbines, PV plants or conventional power generating plants). In the event of a grid-side fault, i.e. a temporary undervoltage event, the plants are required to act in a grid-stabilizing manner.

An "inert load" as used herein is a non-reactive or resistive load that does not contribute to the system's reactive power demand. It primarily consumes active power and typically consists of equipment or devices that do not generate additional reactive power requirements, thereby helping to maintain a stable power factor and voltage profile within the electrical network.

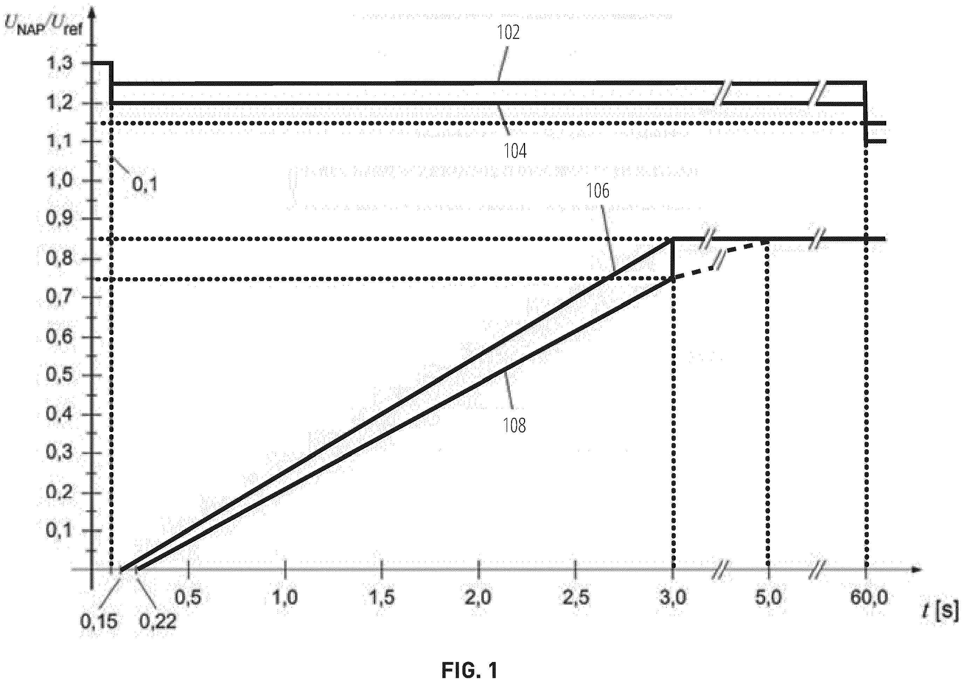

Transmission System Operators (TSOs) around the world are establishing grid codes that include requirements for large-scale loads in addition to generating plants. FIG. 1 illustrates several grid faults that might occur on various grids. Many proposed and existing grid codes require large loads to have sufficient FRT capability to "ride-through" the faults illustrated in FIG. 1 meaning they stay connected to the grid until the fault clears.

FIG. 1 illustrates four possible grid faults, including a 220kV grid fault 102, a 440kV grid fault 104, a three-phase short circuit 106, and a two-phase short circuit 108. The 220kV grid fault 102 and the 440kV grid fault 104 are high-voltage grid faults and generally appear as an overvoltage.

The three-phase short circuit 106 and the two-phase short circuit 108 are low-voltage faults in which a short circuit condition results in a voltage drop that may be as low as zero volts. Typically, the grid clears these types of faults rapidly. In the examples of FIG. 1, the faults, and in particular the low-voltage faults clear in about three seconds. The proposed grid codes may require large loads to remain connected to the grid during these events. This may require that the loads continue to receive power at an operating voltage (e.g., 90% of full voltage) for sufficient time to allow the grid fault to clear without disconnecting the load. In the illustrated example, the system would need to maintain the voltage on the loads for up to three seconds before being allowed to disconnect. If the voltage dip is longer than the defined time or the recovery of the grid voltage has a smaller gradient (below the two-phase short circuit 108), the plants are allowed to disconnect.

Additionally, electrolyzer plants require a certain threshold DC voltage in order to allow current-flow and operate. Thus, the FRT on the AC side is putting much more stringent requirements on the DC side, where the electrolyzer load is connected. The current flow on the DC side is only enabled, once the AC side voltage has returned to a certain threshold (typically in the range of at least 50%). Only then is current conducted and thus power is again consumed. As a result, TSOs are considering even more stringent requirements on the DC side.

Loads in general, and electrolysis plants in particular typically do not provide FRT capabilities due to limited ramp-up and ramp-down rates. The time constants of electrochemical and mechanical processes are significantly longer than those of electrical grid events and the inert load plants as such do not feature FRT capability. In the case of electrolysis plants, power ramp-up and ramp-down rates must be adhered to in order to inhibit instabilities in gas-handling systems and to protect the membranes of the electrolyzers. PEM electrolysis (proton exchange membrane) typically features higher ramp-up and ramp-down rates compared with alkaline electrolysis, but nevertheless the rates are orders higher than those from electrical grid events.

Without additional measures on the down-stream process side, inert load plants, such as electrolysis plants, are not able to fulfill the discussed and foreseeable demands from TSOs with regards to FRT capability. Additionally, plant-side requirements and characteristics demand a stable power input to the down-stream electrolysis process, since even small deviations in input voltage lead to large deviations in the consumed power (V-I characteristic). This in combination with the requirement to reach pre-fault power consumption within a short period of time (typically within 1-2 s), lead to the requirement of providing a constant power input during grid-side under voltage events.

Additional measures on the electrical side may be included to enhance the stable operation of large-scale electrolysis plants under grid-side events while also complying with the current and possible future grid codes.

One approach is to provide each electrolysis unit, or other inert load (hundreds of kW up to 100 MW) with one respective energy storage device to provide power during a period of power undersupply in the event of a grid-side fault. Typically, this is done using a parallel connection of the electrolysis unit and the energy storage device on the connection of the electrolysis unit.

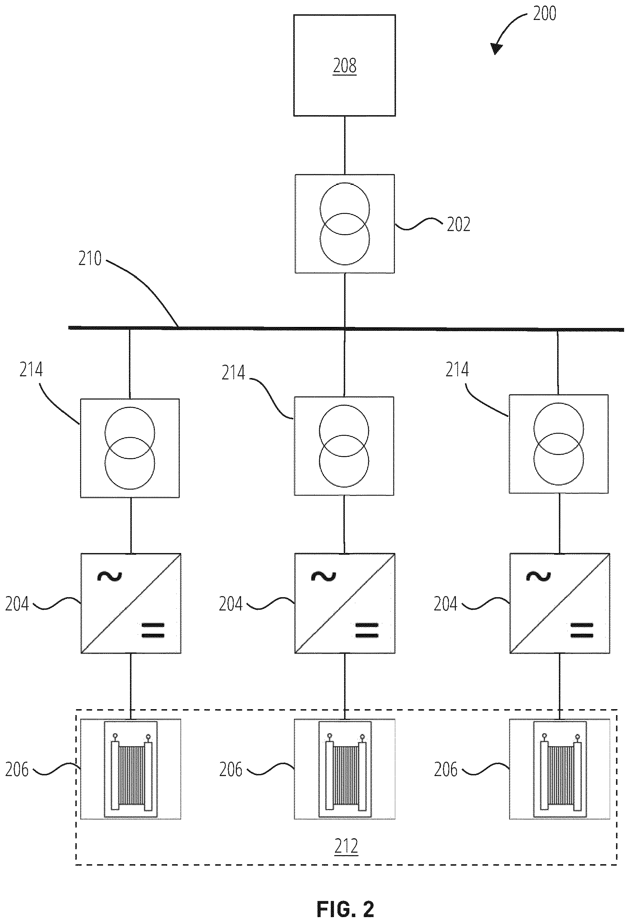

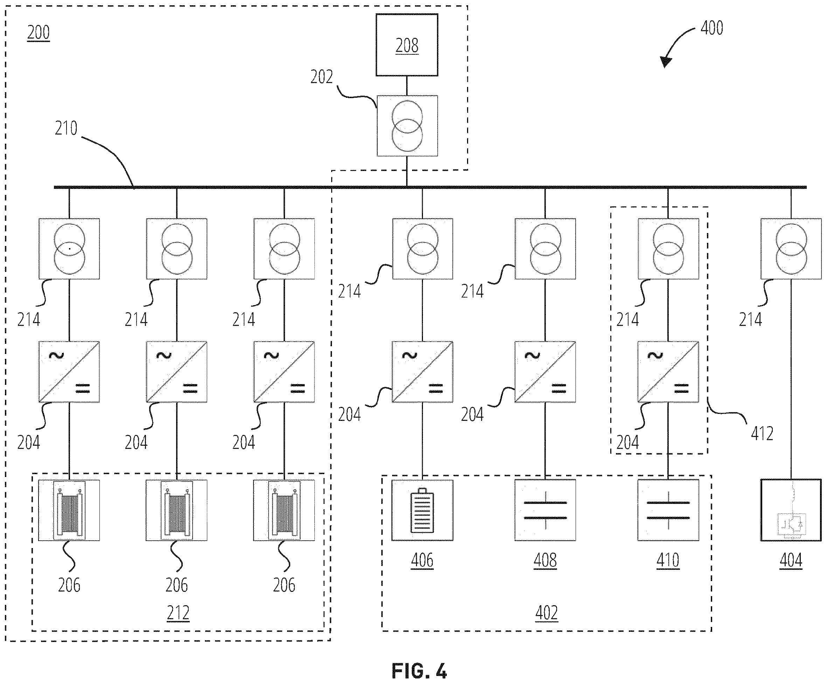

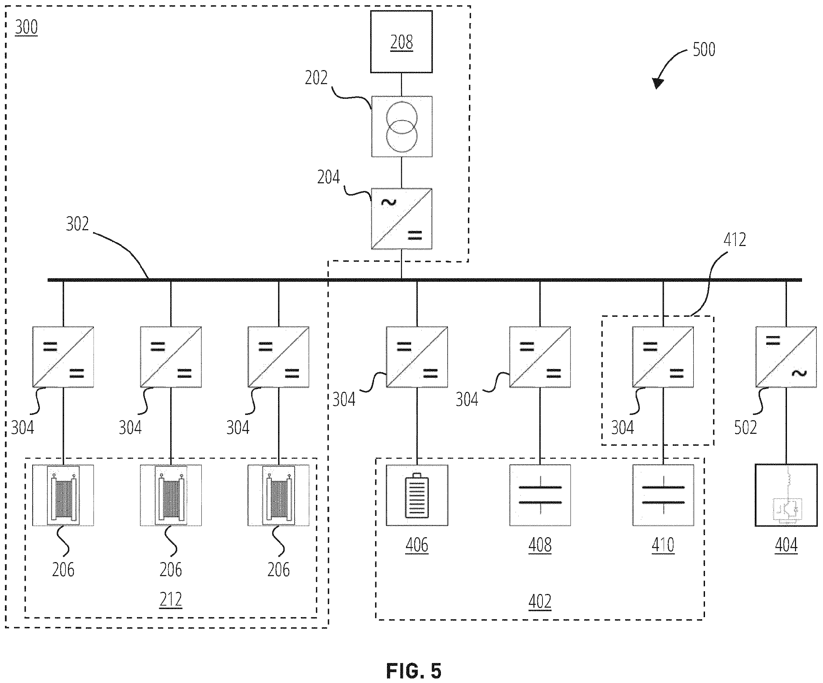

Another approach is illustrated in FIG. 4 and FIG. 5. Before describing the approach in detail, it is important to describe the basic system for connecting the loads in question. FIG. 2 schematically illustrates an electrical connection between a public grid 208 and a plurality of electrical loads 212. The plurality of electrical loads 212 includes two or more electrolyzers 206 with other loads also being possible.

The public grid 208 provides electrical power at a desired voltage and frequency. Generally, the frequency is maintained very closely to the desired value (50 Hz in Europe, 60 Hz in the United States) as part of the grid code requirements. The desired voltage can vary depending upon the connection point within the public grid 208. For example, the voltage may be different depending upon whether the connection is made at a high voltage point, a medium voltage point, or even a low voltage point. Regardless of the voltage connection, the grid code requirements often require that the voltage be maintained at or very near the desired voltage.

In the arrangement of FIG. 2, a coupling transformer 202 receives electrical power at the voltage provided by the public grid 208 and converts that power to a desired voltage. In most cases, the coupling transformer 202 steps down the voltage from the public grid 208. However, some arrangements may require a step-up in voltage.

An AC bus 210 is connected to the coupling transformer 202 and operates at the voltage output from the coupling transformer 202. In the construction of FIG. 2, the AC bus 210 may operate as a medium voltage alternating current (MVAC) AC bus 210. The AC bus 210 provides a common connection point for the plurality of electrical loads 212 as well as other loads or devices as will be discussed.

Often, the AC bus 210 operates at a voltage that may not be appropriate for one or more of the loads. In the arrangement of FIG. 2, each electrolyzer 206 includes an associated secondary transformer 214 that steps the voltage from the AC bus 210 either up or down as may be required by the particular load or electrolyzer 206. In some constructions, the secondary transformer 214 may not be needed if the AC bus 210 operates at the desired voltage.

The public grid 208 provides alternating current (AC) power to the coupling transformer 202, the AC bus 210, and the secondary transformers 214. However, some loads, including electrolyzers 206 operate using direct current (DC) power. To address this, each electrolyzer 206 includes a corresponding AC to DC converter 204 that operates to convert the incoming AC power to DC power for use by the electrolyzer 206.

Thus, the arrangement of FIG. 2 illustrates a large-scale inert load plant 200 that includes several load lines connected to the medium voltage AC bus 210 (MVAC) which is connected to a single point of common coupling (PCC) via the coupling transformer 202. Each of the load lines encompasses a multi-MW electrolyzer 206 connected to the common medium voltage AC bus 210 via an AC to DC converter 204 and a secondary transformer 214. The AC to DC converter 204 and the secondary transformer 214 are sometimes referred to together as a converter.

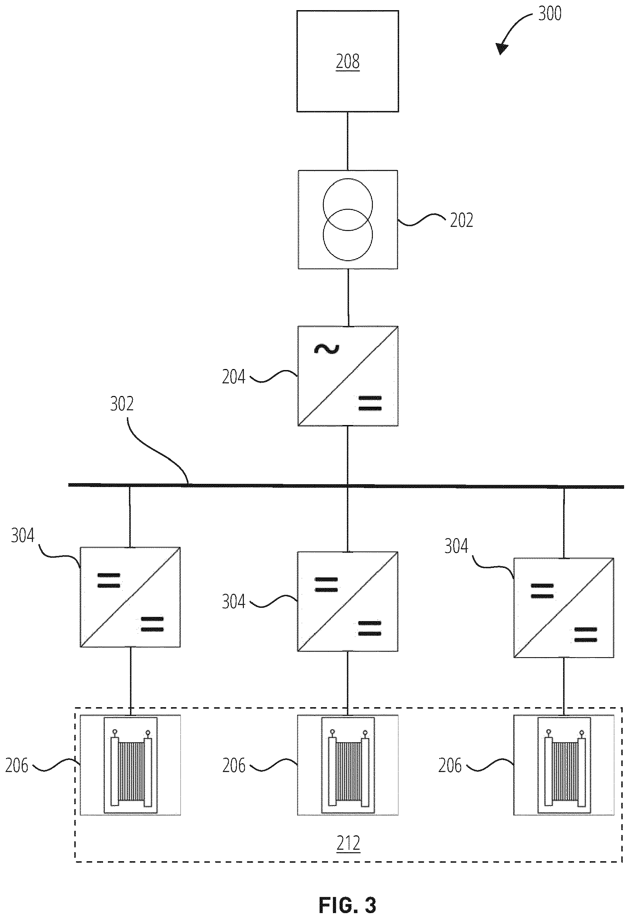

The arrangement of FIG. 3 illustrates a similar arrangement to that of FIG. 2. However, rather than providing an AC bus 210, the arrangement of FIG. 3 includes a DC bus 302. As with the arrangement of FIG. 2, a coupling transformer 202 connects to the public grid 208 and steps up or steps down the voltage of the power provided by the public grid 208.

An AC to DC converter 204 is connected to the coupling transformer 202 and converts the incoming AC power to DC power which is directed to the DC bus 302. Each of a plurality of electrical loads 212, electrolyzers 206 as illustrated in FIG. 3 may connect directly to the grid. However, in the arrangement of FIG. 3, each electrolyzer 206 includes an associated DC to DC converter 304 that operates to condition the DC power provided to its associated electrolyzer 206.

Thus, the arrangement of FIG. 3 illustrates a large-scale inert load plant 300 that includes several load lines connected to the medium voltage DC bus 302 (MVDC) which is connected to a single point of common coupling (PCC) via the coupling transformer 202 and the AC to DC converter 204. Each of the load lines encompasses a multi-MW electrolyzer 206 connected to the common medium voltage DC bus 302 via a DC to DC converter 304, sometimes referred to as a converter.

FIG. 4 illustrates an AC energy distribution system 400 that includes the inert load plant 200 illustrated in FIG. 2 and additionally includes an energy storage system 402 and a STATCOM system 404. As will be discussed in greater detail, the STATCOM system 404 is an AC device and is therefore connected directly to the AC bus 210 or is connected to the AC bus 210 via a secondary transformer 214.

The STATCOM system 404 includes a Static Synchronous Compensator, which is a device that regulates voltage at the point of connection to a power grid by absorbing or providing reactive current. STATCOMs are shunt-connected to the grid and use power electronics to form a voltage-source converter. This converter can act as either a source or sink of reactive AC power to an electricity network. STATCOMs are part of the FACTS (Flexible AC Transmission Systems) family of devices.

STATCOMs or STATCOM systems 404 are used in transmission systems to regulate voltage and assist with stability. They work by injecting or absorbing reactive power in order to increase or decrease voltage magnitude. STATCOMs have two possible steady-state operating modes: inductive (lagging) and capacitive (leading). They have good dynamic response characteristics and can respond to transient disturbances extremely rapidly.

With reference to FIG. 4, the energy storage system 402 may include one or more energy storage devices including but not limited to batteries 406, capacitors 408, ultra capacitors 410 (sometimes referred to as super capacitors), mechanical storage systems such as flywheels, and the like. Electrical devices such as batteries 406, capacitors 408, ultra capacitors 410 and the like are very fast and are able to react to sudden changes in the power supply such that they can provide power to the AC bus 210 in response to an event in the public grid 208 that reduces the power available to the plurality of electrical loads 212 from the AC bus 210.

Each energy storage device of the energy storage system 402 includes an associated AC to DC converter 204 that converts AC power provided by the AC bus 210 to DC power suitable for use by each particular energy storage device. If an AC energy storage device was included in the energy storage system 402, the AC to DC converter 204 might be eliminated or replaced with an AC to AC converter or transformer that conditions the power as might be required.

Each AC to DC converter 204 could be connected directly to the AC bus 210 if desired. However, as illustrated in FIG. 4 each energy storage device includes an associated secondary transformer 214 that adjusts the power provided by the AC bus 210 to assure that a desired voltage is delivered to the associated AC to DC converter 204. The components between each energy storage device and the AC bus 210 may be considered a converter 412 with the components cooperating to condition or convert the bi-directional power flow as required.

As one of ordinary skill will understand, the foregoing description of the energy storage devices of the energy storage system 402 describes them in a power receiving or charging mode. However, each of the energy storage devices also operates in an energy discharge mode in which one or all of them provide power to the AC bus 210 and ultimately the plurality of electrical loads 212. In the discharge mode, each energy storage device delivers DC power to its associated AC to DC converter 204 which operates as a DC to AC converter or inverter to deliver AC power to its associated secondary transformer 214. Each secondary transformer 214 adjusts the incoming voltage from the associated energy storage device and AC to DC converter 204 to a voltage that matches the AC bus 210. Thus, the energy storage system 402 is operable to draw power from the AC bus 210 to charge the various devices and store electrical power or to discharge energy to add power to the AC bus 210 in times of need.

As noted, the STATCOM system 404 does not include an AC to DC converter 204 as it is an AC device. However, a secondary transformer 214 is provided to assure that the voltage of the power delivered to/from the STATCOM system 404 matches the needs of the STATCOM system 404 or the AC bus 210 depending upon the direction of power flow.

In one arrangement, the energy storage system 402 is sized to provide at least two seconds of full power to the plurality of electrical loads 212. In this arrangement, if the plurality of electrical loads 212 total 200 MW of load, the energy storage system 402 is sized to deliver 111 kWhrs of power to the AC bus 210 without recharging. Of course, other systems could be differently sized to meet whatever design requirements or grid codes might be applicable to the particular installation. For example, systems could be employed that provide sufficient energy for between 1 and 10 seconds.

FIG. 5 illustrates a DC energy distribution system 500 that includes the inert load plant 300 of FIG. 3, an energy storage system 402, and a STATCOM system 404. As discussed, the STATCOM system 404 is an AC device that requires an input of AC power and produces an AC output. To accommodate this in the construction of FIG. 5, which includes a DC bus 302, a DC to AC converter 502 is provided. The DC to AC converter 502 receives DC power from the DC bus 302 and provides AC power to the STATCOM system 404. In situations where the STATCOM system 404 is delivering power, the DC to AC converter 502 operates to convert the AC power from the STATCOM system 404 to DC power which is then delivered to the DC bus 302.

The energy storage system 402 may include any or all of the energy storage devices described with regard to FIG. 4. As discussed, these energy storage devices are DC devices such that they could be connected directly to the DC bus 302 if desired. However, it is preferred that a DC to DC converter 304 be provided between each energy storage device and the DC bus 302 to condition and control the power flow between the associated energy storage device and the DC bus 302. The components between each energy storage device and the DC bus 302 may be considered a converter 412 with the components cooperating to condition or convert the bi-directional power flow as required.

In operation and with reference to FIG. 4, the public grid 208 operates to provide AC power at a grid frequency and voltage. The coupling transformer 202 provides a connection between the public grid 208 and the AC bus 210 and operates to step up or step down the voltage depending on the voltage difference between the AC bus 210 and the grid voltage at the connection as well as the direction of power flow.

Under normal grid conditions, AC power from the AC bus 210 flows through the secondary transformers 214 and the AC to DC converters 204 to provide sufficient power to the electrolyzers 206 to sustain their proper operation. Similarly, power is delivered to each of the energy storage devices, as may be required to charge or store energy to each device's full capacity.

If a grid fault occurs, the system of FIG. 4 provides ride-through capability to allow for sustained operation of the plurality of electrical loads 212 to allow time for the grid fault to be corrected. For example, if a grid fault results in a sudden voltage drop or power drop that results in insufficient power or power with too low of a voltage to be delivered to the plurality of electrical loads 212, some or all the loads would disconnect or shutdown. However, the energy storage system 402 of FIG. 4 operates to quickly provide power to the AC bus 210 at the proper voltage and in the proper amount to maintain operation of the plurality of electrical loads 212 for a predetermined period of time (e.g., two seconds). If the grid fault corrects itself, the full power flow is restored, the pluralities of electrical loads 212 return to normal operation with all the necessary power provided from the AC bus 210, and additional power is delivered to the energy storage system 402 to recharge the energy storage devices.

The arrangement of FIG. 5 operates in a similar manner with different components positioned between the DC bus 302, the plurality of electrical loads 212, and the energy storage system 402.

The STATCOM system 404 operates in both arrangements as required to stabilize the AC bus 210 or the DC bus 302 and to contribute to the stability of the public grid 208.

The arrangements illustrated herein utilize a common energy buffer system or energy storage system 402 to enable the entire plant system (AC energy distribution system 400 or DC energy distribution system 500) to feature FRT capability (fault ride-through). The energy storage system 402 may include batteries, capacitors, super-capacitors, flywheels, and the like and may use DC/DC or DC/AC active front end (AFE) converters to connect to the common bus (AC bus 210 or DC bus 302). The energy storage system 402 may be dimensioned to meet or exceed the requirements of the local grid codes. Some grid codes may require energy reserves to meet or exceed two seconds of the rated plant power consumption. For example, a plant or system that has a maximum power consumption of 200 MW may be required to provide energy reserves of at least 111 kWh. Of course, the two second example is provided for explanatory purposes with other systems that provide less of more energy storage being provided if desired.

In order to recharge the energy storage devices of the energy storage system 402 after a grid event, the interconnecting devices between the energy storage system 402 and the bus (AC bus 210 or DC bus 302) is arranged to allow a bi-directional power flow.

Depending on the degree of additional functionality desired from the energy storage system 402, the intervening components may be a simple boost or buck converter (i.e., DC/DC 304) or a galvanically-isolated DC/DC converter as well as an IGBT, IGCT, or silicon carbide MOSFET-based B6 AC/DC converter 204. Of course, other converter systems are also feasible.

Also, the inclusion of a dedicated STATCOM system 404 on the bus level provides the necessary power infeed to the large-scale plant system as well as ancillary grid services in normal grid operation.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A power system (400, 500) that is fed electrical power from a public grid (208), the power system (400, 500) comprising:
a bus (210, 302) electrically connected to the public grid (208) and operable to transfer power to and from the public grid (208);
a plurality of electrical loads (212) coupled to the bus (210, 302) and operable to draw a first quantity of power from the bus (210, 302) during operation;
an energy storage system (402) electrically connected to the bus (210, 302) and operable to store a second quantity of power; and
a converter (412) operable to direct a third quantity of power from the energy storage system (402) to the bus (210, 302) in response to a drop in the available power from the public grid (208), the third quantity of power delivered by the energy storage system (402) being sufficient to allow the bus (210, 302) to deliver at least the first quantity of power to the plurality of electrical loads (212) to maintain the operation of the plurality of electrical loads (212).

2. The power system (400, 500) of claim 1, wherein the electrical loads (212) include at least two electrolyzers (206) that operate in response to the flow electrical power to produce hydrogen.

3. The power system (400, 500) of claim 1 or 2, wherein the energy storage system (402) includes at least two energy storage devices selected from the group of a battery (406) and a capacitor (408, 410).

4. The power system (400, 500) of claim 3, wherein the converter (412) includes a plurality of electrical converters, each electrical converter connected to the bus (210, 302) and operable to deliver conditioned power to one and only one electrical load of the plurality of electrical loads (212) and energy storage devices.

5. The power system (400, 500) of claim 4, wherein the electrical converters are selected from the group of an AC to DC converter (204) and a DC to DC converter (304).

6. The power system (400, 500) of any one of claims 3 to 5, wherein the capacitor is an ultra-capacitor (410).

7. The power system (400, 500) of any one of claims 1 to 6, wherein the energy storage system (402) is operable to store a stored quantity of energy sufficient to deliver the first quantity of power for two seconds.

8. The power system (400, 500) of any one of claims 1 to 7, wherein the converter (412) includes one of an AC to DC converter (204) and a DC to DC converter (304) operable to deliver DC power to each electrical load of the plurality of electrical loads (212).

9. A method of operating a power system (400, 500) that receives electrical power from a public grid (208), the method comprising:
connecting a bus (210, 302) to the public grid (208) to allow for the transfer of power between the public grid (208) and the bus (210, 302);
operating a plurality of electrical loads (212) by drawing a first quantity of power from the bus (210, 302);
storing a second quantity of power in an energy storage system (402), the energy storage system (402) drawing energy from the bus (210, 302);
detecting a drop in the available power from the grid (208); and
delivering a third quantity of power from the energy storage system (402) to the bus (210, 302), the third quantity of power being sufficient to allow the bus (210, 302) to continuously deliver the first quantity of power to the plurality of electrical loads (212) to allow for continued operation of the plurality of electrical loads (212).

10. The method of claim 9, wherein at least one electrical load of the plurality of electrical loads (212) includes an electrolyzer (206) and operates in response to the receipt of electrical power to produce hydrogen.

11. The method of claim 9 or 10, further comprising selecting at least two energy storage devices from the group of a battery (406) and a capacitor (408, 410).

12. The method of claim 11, further comprising conditioning the power using a plurality of electrical converters (412), each electrical converter (412) connected to the bus (210, 302) and operable to deliver conditioned power to one and only one electrical load (212) of the plurality of electrical loads (212) and energy storage devices.

13. The method of claim 12, further comprising selecting the electrical converters (412) from the group of an AC to DC converter (204) and a DC to DC converter (304).

14. The method of any one of claims 9 to 13, further comprising storing a stored quantity of energy in the energy storage system (402), the stored quantity of energy sufficient to deliver the first quantity of power for two seconds.

15. The method of any one of claims 9 to 14, further comprising delivering power from the bus (210, 302) to the energy storage system (402) when the power available on the bus (210, 302) exceeds the first quantity of power.
